# EUROPÄISCHE PATENTSCHRIFT

(11) **EP 0 560 280 B1**
(45) Veröffentlichungstag und Bekanntmachung des Hinweises auf die Patenterteilung: **24.09.1997**
(21) Anmeldenummer: 93103752.7
(22) Anmeldetag: 09.03.1993
(51) Int. Cl.: A21D 8/02, B01F 11/00, A01G 7/04

(54) **Verfahren zur Verbesserung der Haltbarkeit von Materialien**
Process for the conservation of materials
Procédé de conservation de matériaux

(30) Priorität: 09.03.1992 DE 4207387; 12.05.1992 DE 4215637
(43) Veröffentlichungstag der Anmeldung: 15.09.1993
(73) Patentinhaber: TEGUT THEO GUTBERLET STIFTUNG & CO., D-36039 Fulda (DE)
(72) Erfinder: Doman, Michael Dr., D-2400 Lübeck (DE); Gutberlet, Wolfgang, D-6409 Dipperz (DE)
(74) Vertreter: Glawe, Delfs, Moll & Partner

(56) Entgegenhaltungen:
- EP-A- 0 062 966
- EP-A- 0 176 749
- EP-A- 0 342 584
- WO-A-80/01830
- GB-A- 867 428
- GB-A- 880 182
- GB-A- 2 225 921
- US-A- 1 501 527
- Section PQ, Week 8744, Derwent Publications Ltd., London, GB; Class P64, AN 87- 312381
- Section Ch, Week 8824, Derwent Publications Ltd., London, GB; Class C03, AN 88- 166705
- PATENT ABSTRACTS OF JAPAN vol. 16, no. 43 (C-0907)4. Februar 1992

## Beschreibung

Die Erfindung betrifft ein Verfahren zur Verbesserung der Haltbarkeit von flüssigen, pastösen und/oder schüttfähigen Medien und damit hergestellten und/oder behandelten Erzeugnissen. Sie betrifft ferner ein Verfahren zur Förderung des Wachstums von Saatgut und Pflanzen.

Flüssige Medien werden in vielfältiger Weise, beispielsweise als Nahrungsmittel, Kosmetika, pharmazeutische Präparate, oder zur Herstellung solcher Erzeugnisse verwendet. Zur Verbesserung der Haltbarkeit solcher Medien oder der damit hergestellten Erzeugnisse ist es bekannt, diesen chemische Konservierungsmittel zuzusetzen. Solche Konservierungsmittel haben jedoch unerwünschte Nebenwirkungen, beispielsweise können sie bei Anwendung in Nahrungsmitteln oder Kosmetika Allergien hervorrufen. Es ist gleichfalls bekannt, die Haltbarkeit von flüssigen Medien durch Erhitzen zu verbessern. Bei hitzeempfindlichen Medien kann dieses Verfahren jedoch nicht angewendet werden, nachteilig ist auch der dafür nötige große Aufwand an Energie.

WO 80/01830 beschreibt ein Verfahren und eine Vorrichtung zum Schütteln von Behandlungsgut mittels einer Umlauf- und Taumelbewegung eines Aufnahmebehälters für dieses Gut. Es wird bechrieben, daß sich ein Medium durch das Schütteln entgasen läßt.

Der Erfindung liegt die Aufgabe zugrunde, ein Verfahren der eingangs genannten Art zu schaffen, das die genannten Nachteile nicht aufweist und das einfach und kostengünstig anzuwenden ist. Insbesondere ist es Aufgabe der Erfindung, ein Verfahren zur Verbesserung der Eigenschaften von Flüssigkeiten zu schaffen.

Die Erfindung löst diese Aufgabe dadurch, daß das Medium in einem Behälter geschüttelt wird und daß bei der Schüttelbewegung Änderungen der Bewegungsrichtung auftreten, in deren Verlauf auf das Medium eine größere Umkehrbeschleunigung ausgeübt wird als bei einer einer harmonischen Schwingung entsprechenden Umkehr der Bewegungsrichtung. Unter einer Schüttelbewegung ist dabei jede Bewegung zu verstehen, bei der Änderungen sowohl der Bewegungsrichtung als auch der Beschleunigung auftreten. Zweckmäßigerweise führt der Behälter eine solche Bewegung aus und schüttelt so das Medium. Es ist auch möglich, zusätzlich in dem Behälter eine Vorrichtung, beispielsweise eine Membran, anzuordnen, die solche Schüttelbewegungen ausführt. Durch die hohe Umkehrbeschleunigung erhält man eine besonders starke dynamische Verwirbelung aller Volumenbereiche und durch den auftretenden Pralldruck hohe Druckschwankungen im Flüssigkeitsinneren während des Schüttelvorgangs.

Überraschenderweise hat sich gezeigt, daß sich die mikrobiologische Haltbarkeit der geschüttelten Medien oder damit hergestellter bzw. behandelter Erzeugnisse erhöht. Bei Nahrungsmitteln kann zudem eine Geschmacksveränderung eintreten. Mit geschütteltem Wasser angesetztes Saatgut bzw. damit gegossene Pflanzen zeigen ein kräftigeres Wachstum.

Vorteilhafterweise wird das Medium in Gegenwart einer Gasphase geschüttelt. Diese Gasphase kann aus dem Dampf der geschüttelten Flüssigkeit oder aus einem anderen Gas bestehen. Es ist vorteilhaft, wenn die Gasphase Sauerstoff enthält.

Zweckmäßigerweise erfolgt die Schüttelbewegung in drei Dimensionen und auf einer reversierenden Bahn. Besonders vorteilhaft ist es, wenn der Behälter auf einer räumlichen Lemniskatenbahn umgeschwenkt wird. Bei dieser räumlichen Umschwenkbewegung tritt eine chaotische Durchwirbelung der Flüssigphase, Gasphase und evtl. vorhandener Feststoffpartikel in dem geschüttelten Medium auf und führt zur Bildung und fortwährenden Umbildung von Grenzflächen, die eine sehr große Gesamtfläche besitzen.

Vorteilhafterweise wird das Medium mindestens 20 sec, vorzugsweise mindestens zwei Minuten lang bei einer Schüttelfrequenz von mindestens 35 min⁻¹, d. h. 35 Zyklen pro Minute, geschüttelt. Bei empfindlichen biologischen Flüssigkeiten sind Schüttelfrequenzen von 35 bis 40 min⁻¹ vorteilhaft, bei weniger empfindlichen nichtbiologischen Flüssigkeiten, beispielsweise Wasser, können auch höhere Schüttelfrequenzen von 50 min⁻¹ oder höher gewählt werden. In vielen Fällen ist eine Schüttelzeit von etwa 3 min vorteilhaft. Untersuchungen zum Einfluß der Schütteldauer auf den angestrebten Erfolg (Haltbarkeitsverbesserung, Wachstumsförderung) haben gezeigt, daß dieser als Funktion der Schütteldauer offensichtlich asymptotisch gegen einen Grenzwert strebt. Eine Verlängerung der Schütteldauer deutlich über die genannten 3 min hinaus bewirkt nur noch eine geringfügige Verbesserung des gewünschten Erfolgs.

Es kann zweckmäßig sein, daß während des Schüttelns ein Medium dem Behälter zugeführt oder aus diesem abgeführt wird. Auf diese Weise kann der Schüttelprozeß vollkontinuierlich durchgeführt werden. Zusätzlich können an oder in dem Behälter Meßinstrumente, beispielsweise zur Erfassung des Drucks oder der Temperatur, sowie Einrichtungen zum Heizen und/oder Kühlen vorgesehen sein.

Der Innenraum des zur Durchführung des Verfahrens verwendeten Behälters hat zweckmäßigerweise eine zylindrische Form. Es können aber auch andere Behälterformen verwendet werden, beispielsweise kubische oder elliptoidische Behälter oder Behälter mit einer Einschnürung im mittleren Bereich, ähnlich wie bei einer Eieruhr. Denkbar ist auch, daß der Behälterinnenraum die geometrische Form verschiedener Kristallformen aufweist. Als Material für die Innenwand des Behälters sind beispielsweise Glas, Edelstahl, sonstige Edelmetalle, keramische Materialien, Graphit oder Teflon geeignet.

Als besonders vorteilhaft hat es sich erwiesen, wenn das Schütteln mit einer Vorrichtung durchgeführt, die in der deutschen Patentanmeldung DE-OS 38 16 654 oder der EP 89 108 749.6 des Anmelders beschrieben ist. Der Inhalt dieser Schriften wird hiermit zum Gegenstand der Offenbarung der vorliegenden Anmeldung gemacht.

Nachfolgend werden einige Anwendungsbeispiele des erfindungsgemäßen Verfahrens beschrieben. Der Schüttelvorgang wurde dabei jeweils in einem auf einer räumlichen Lemniskatenbahn umgeschwenkten zylindrischen Behälter durchgeführt. In der Zeichnung zeigt
- Fig. 1: schematisch eine solche Bahnkurve,
- Fig. 2: ein zur Durchführung des Verfahrens verwendetes Gerät in sechs verschiedenen Stadien eines Schüttelzyklus,
- Fig. 3: die Anwendung des Verfahrens bei der Brotherstellung.

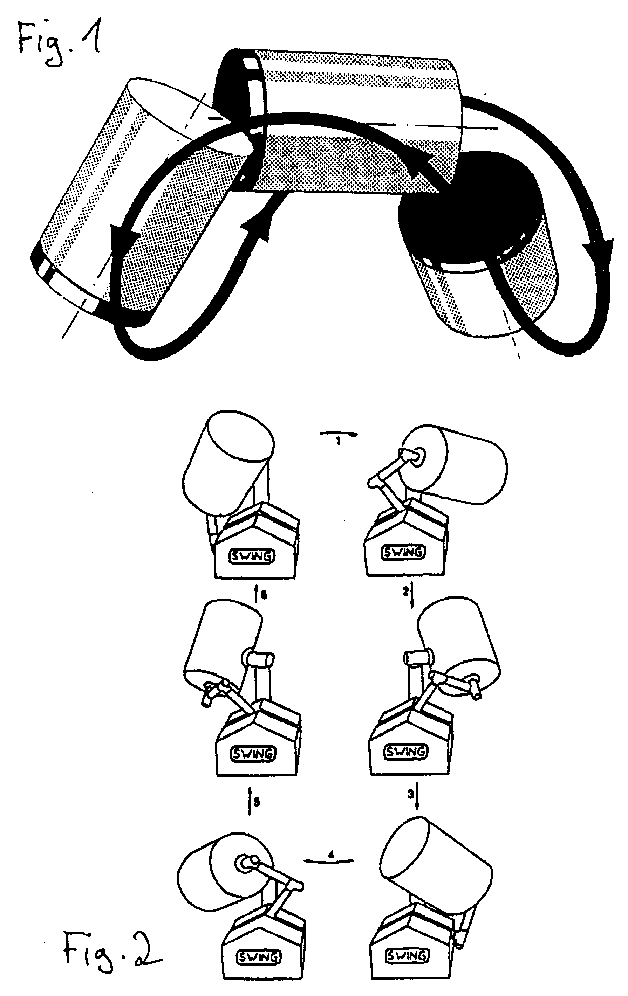

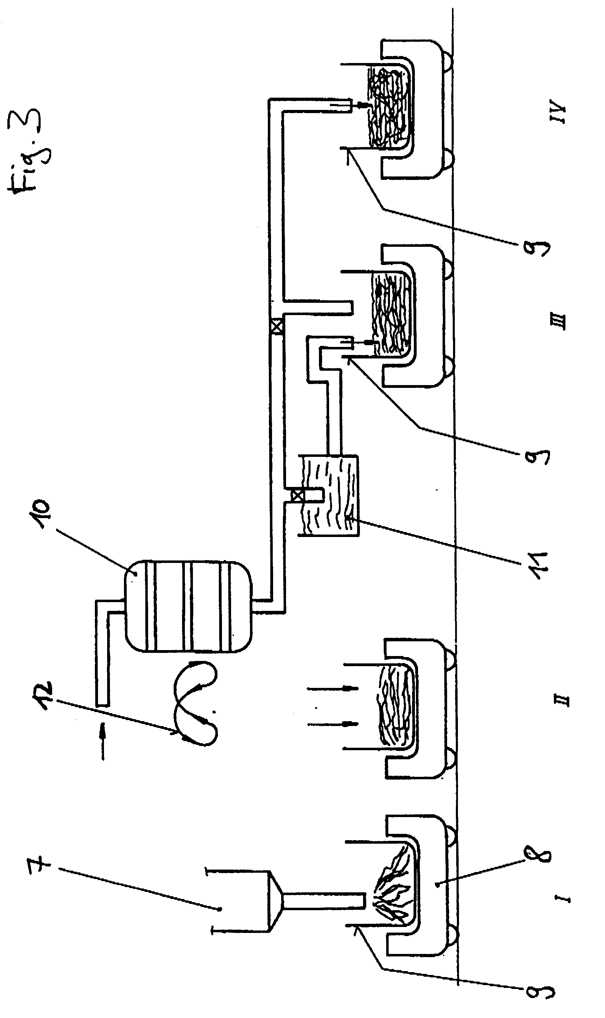

Man erkennt in Fig. 1 und 2, daß keine Nettorotation des Behälters stattfindet, so daß einerseits auf das geschüttelte Medium keinerlei gleichbleibende Fliehkräfte ausgeübt werden, und andererseits problemlos Leitungen, beispielsweise zum Zu- und Abführen von Medium, an den Behälter angeschlossen werden können.
I. Wäßrige Auszüge von ungetrockneten oder getrockneten Pflanzen oder zerkleinerten Pflanzenteilen, die in einer mit einem Glasstopfen verschlossenen Glasflasche von 1 l Inhalt (Füllgrad 75%) 2 min lang bei einer Schüttelfrequenz von 40 min⁻¹ geschüttelt wurden, zeigen eine erhöhte Haltbarkeit und Resistenz gegenüber Schimmelbildung. Diese Wirkung tritt auf unabhängig davon, ob man
   i. den Auszug mit geschütteltem Wasser ansetzt,
   ii. den Auszug unter Schütteln mit ungeschütteltem Wasser herstellt, oder
   iii. den Auszug mit ungeschütteltem Wasser herstellt, einige Zeit wartet und dann schüttelt.
   Beispielsweise setzt bei einem geschüttelten wäßrigen Krappwurzelauszug die Schimmelbildung erst drei Tage später ein als bei einem ungeschüttelten Auszug.
II. In einem Glasgefäß mit einem Volumen von 20 l wurden 10 l Leitungswasser 3 min lang bei einer Schüttelfrequenz von 45 min⁻¹ geschüttelt. Das so behandelte Leitungswasser zeigte folgende vorteilhafte Wirkungen:
   1. Wird das geschüttelte Wasser zur Herstellung von Brotteig verwendet, erhöht sich die Haltbarkeit des mit diesem Teig gebackenen Brotes im Vergleich zu Brot, das aus mit ungeschütteltem Wasser hergestellten Teig gebacken wurde. Insbesondere tritt ein Schimmelbefall des Brotes erst zwei Tage später ein. Desweiteren wird das Brot bei Verwendung des geschüttelten Wassers lockerer und bekömmlicher.
   2. In geschütteltem Wasser angesetzte Getreidesamen keimen schneller und bringen Keimlinge mit kräftigerem Wachstum hervor als in ungeschütteltem Wasser angesetzte Getreidesamen. Gleiches gilt für Gemüsesamen, z. B. Gurken, Tomaten und Kresse. Auch dabei zeigen die Jungpflanzen ein kräftigeres Wachstum.
   3. Mit geschütteltem Wasser gegossene und besprühte Zimmerpflanzen zeigen weniger Schädlingsbefall und sind insgesamt kräftiger und widerstandsfähiger als die mit unbehandeltem Wasser gegossene Vergleichsgruppe. In einigen Fällen konnte bei zuvor mit unbehandeltem Wasser gegossenen pilzbefallenen Pflanzen durch nachfolgende Behandlung mit geschütteltem Wasser ein Rückgang des Pilzbefalls bewirkt werden.
   4. Mit geschütteltem Wasser hergestellte Getränke wie Limonaden, Fruchtsäfte oder Tees zeigen im Vergleich zu mit ungeschütteltem Wasser hergestellten Getränken eine Geschmacksveränderung, die von den meisten Testpersonen als angenehm empfunden wird. In geschütteltem Wasser hergestellte Pflanzenauszüge weisen ein kräftigeres Aroma auf.
III.Ein Liter naturtrüber Apfelsaft wurde in einem 1,5 l Glasbehälter 3 min lang bei einer Schüttelfrequenz von 35 min⁻¹ geschüttelt. Durch das Schütteln tritt eine von den meisten Testpersonen als angenehm empfundene Geschmacksveränderung ein, und die Haltbarkeit, insbesondere die Resistenz gegenüber Schimmelbildung, ist erhöht. Gleiches gilt für sonstige Fruchtsäfte.
IV. Geschüttelte Milch zeigt ebenfalls eine von den meisten Testpersonen als angenehm empfundene Geschmacksveränderung und eine erhöhte Haltbarkeit. Gleiches gilt beispielsweise für mit geschüttelter Milch hergestellten Backwaren.
V. Bei der Brotherstellung werden Mehl und Hefe als Grundstoffe mit Wasser vermengt und der dabei entstehende Teig zu Brot gebacken. Um die Eigenschaften des Brotes zu verbessern, sind in letzter Zeit verschiedene Zuschlagstoffe bekanntgeworden, durch welche die Haltbarkeit des Brotes, insbesondere der Zeitraum bis zum Auftreten von Schimmel, verlängert werden kann. Gegen Nahrungsmittelzusätze bestehen jedoch in jüngster Zeit immer häufiger gesundheitliche Bedenken.
   Wird das zur Teigherstellung verwendete Wasser vor dem Vermischen mit den übrigen Teigbestandteilen nach dem erfindungsgemäßen Verfahren geschüttelt, tritt überraschenderweise ein Schimmelfall des daraus gebackenen Brots erst zwei Tage später ein, als wenn das gleiche Brot mit den gleichen Stoffen, jedoch mit nicht durchgeschütteltem Wasser hergestellt wird. Weiterhin konnte festgestellt werden, daß der Teig durch Verwendung des durchgeschüttelten Wassers lockerer und bekömmlicher wird und die Teigausbeute, also das Verhältnis des gesamten Teiges zur Mehlmenge, von 164 auf 175 steigt.
   Der Grund für diese erhebliche Verbesserung durch den einfachen Verfahrensschritt des Durchschüttelns des Wassers ist nicht eindeutig geklärt. Möglicherweise kommt es durch das Schütteln zu einer Erhöhung des im Wasser gelösten Sauerstoffes, wodurch die Reaktionen mit den Stoffen im Mehl und die Wasserbindung begünstigt werden. Es ist deshalb davon auszugehen, daß sich das erfindungsgemäße Verfahren auch für die Zubereitung anderer Nahrungsmittel, beispielsweise Wurst oder Süßwaren, eignet.
   Die Brotherstellung wird nachfolgend anhand Fig. 3 erläutert. Der Herstellungsverlauf beginnt damit, daß als Verfahrensschritt I aus einem Silo 7 Mehl in ein auf einem Wagen 8 stehendes Behältnis 9 gegeben wird. Als nächster Verfahrensschritt II werden Salz und Zuschlagstoffe, insbesondere Hefe, dem Mehl zugegeben. In der Verfahrensstufe III läßt man aus einem Behälter 10 Wasser und aus einem Sauerteigbehälter 11 flüssigen Sauerteig in das Behältnis 9 gelangen. Je nach Erfordernissen gelangt in der Verfahrensstufe IV Zugußwasser in das Behältnis 9. Danach wird der Teig geknetet und nach einer bestimmten Teigruhe portioniert. Danach gelangt er in den Garraum und wird anschließend gebacken. Wichtig für die Erfindung ist, daß das Wasser im Behälter 10 vor seiner Verwendung durch Bewegen des Behälters 10 auf einer neben dem Behälter 10 angedeuteten Lemniskatenbahn 12 mehrere Minuten lang durchgeschüttelt wird.

## Patentansprüche

1. Verfahren zur Verbesserung der mikrobiologischen Haltbarkeit von flüssigen, pastösen und/oder schüttfähigen Medien und damit hergestellten und/oder behandelten Erzeugnissen, dadurch gekennzeichnet, daß das Medium in einem Behälter geschüttelt wird und daß bei der Schüttelbewegung Änderungen der Bewegungsrichtung auftreten, in deren Verlauf auf das Medium eine größere Umkehrbeschleunigung ausgeübt wird, als bei einer einer harmonischen Schwingung entsprechenden Umkehr der Bewegungsrichtung.

2. Verfahren zur Geschmacksveränderung von flüssigen, pastösen und/oder schüttfähigen Medien und damit hergestellten und/oder behandelten Erzeugnissen, dadurch gekennzeichnet, daß das Medium in einem Behälter geschüttelt wird und daß bei der Schüttelbewegung Änderungen der Bewegungsrichtung auftreten, in deren Verlauf auf das Medium eine größere Umkehrbeschleunigung ausgeübt wird, als bei einer einer harmonischen Schwingung entsprechenden Umkehr der Bewegungsrichtung.

3. Verfahren zur Förderung des Wachstums von Saatgut und/oder Pflanzen, dadurch gekennzeichnet, daß das zum Ansetzen bzw. Gießen verwendete Wasser vorher in einem Behälter geschüttelt wird und daß bei der Schüttelbewegung Änderungen der Bewegungsrichtung auftreten, in deren Verlauf auf das Medium eine größere Umkehrbeschleunigung ausgeübt wird, als bei einer einer harmonischen Schwingung entsprechenden Umkehr der Bewegungsrichtung.

4. Verfahren nach einem der Ansprüche 1 - 3, dadurch gekennzeichnet, daß das Medium in Gegenwart einer Gasphase geschüttelt wird.

5. Verfahren nach Anspruch 4, dadurch gekennzeichnet, daß die Gasphase lediglich Dampf der Flüssigkeit enthält.

6. Verfahren nach Anspruch 4, dadurch gekennzeichnet, daß die Gasphase ein vom Dampf verschiedenes Gas, insbesondere Sauerstoff enthält.

7. Verfahren nach einem der Ansprüche 1 bis 6, dadurch gekennzeichnet, daß die Schüttelbewegung in drei Dimensionen erfolgt.

8. Verfahren nach Anspruch 7, dadurch gekennzeichnet, daß die Schüttelbewegung auf einer reversierenden Bahn erfolgt.

9. Verfahren nach Anspruch 8, dadurch gekennzeichnet, daß der Behälter auf einer räumlichen Lemniskatenbahn umgeschwenkt wird.

10. Verfahren nach einem der Ansprüche 1 bis 9, dadurch gekennzeichnet, daß das Medium mindestens 20 sec, vorzugsweise mindestens 2 min bei einer Schüttelfrequenz von mindestens 35 min⁻¹ geschüttelt wird.

11. Verfahren nach einem der Ansprüche 1 bis 10, dadurch gekennzeichnet, daß während des Schüttelns Medium dem Behälter zugeführt und/oder aus diesem abgeführt wird.

12. Verwendung des Verfahrens nach einem der Ansprüche 1, 2 oder 4 bis 11 bei der Herstellung von Teigwaren, insbesondere Brot.

## Claims

1. A method of improving the microbiological storage quality of liquid, pasty and/or pourable media and products which can be produced and/or treated therewith, characterised in that the medium is vibrated in a container, and in that during the vibrating movement changes in the direction of movement take place in the course of which a greater reverse acceleration is exerted on the medium than in the case of a reversal of the movement direction corresponding to a harmonic vibration.

2. A method of altering the taste of liquid, pasty and/or pourable media and products which can be produced and/or treated therewith, characterised in that the medium is vibrated in a container, and in that during the vibrating movement changes in the direction of movement take place in the course of which a greater reverse acceleration is exerted on the medium than in the case of a reversal of the movement direction corresponding to a harmonic vibration.

3. A method of promoting the growth of seeds and/or plants, characterised in that the water used for starting and/or watering is previously vibrated in a container, and in that during the vibrating movement changes in the direction of movement take place in the course of which a greater reverse acceleration is exerted on the medium than in the case of a reversal of the movement direction corresponding to a harmonic vibration.

4. A method according to any one of Claims 1 to 3, characterised in that the medium is vibrated in the presence of a gaseous phase.

5. A method according to Claim 4, characterised in that the gaseous phase merely contains the vapour of the liquid.

6. A method according to Claim 4, characterised in that the gaseous phase contains a different gas from the vapour, in particular oxygen.

7. A method according to any one of Claims 1 to 3, characterised in that the vibrating movement takes place in three dimensions.

8. A method according to Claim 7, characterised in that the vibrating movement takes place on a reversing path.

9. A method according to Claim 8, characterised in that the container is swung round on a three-dimensional lemniscate path.

10. A method according to any one of Claims 1 to 9, characterised in that the medium is vibrated for at least 20 sec., preferably at least 2 min. at a vibration frequency of at least 35 min.⁻¹.

11. A method according to any one of Claims 1 to 10, characterised in that, during the vibration, medium is fed to the container and/or is discharged therefrom.

12. Use of the method according to any one of Claims 1, 2 or 4 to 11 in the preparation of farinaceous products, in particular bread.

## Revendications

1. Procédé d'amélioration de la conservation microbiologique de milieux liquides, pâteux et/ou pouvant être versés, et de produits fabriqués et/ou traités avec ces milieux,
caractérisé en ce que le milieu est secoué dans un récipient, et en ce que, lors du mouvement de secousses, des modifications du sens de déplacement apparaissent, mouvement de secousses au cours duquel une accélération au renversement de marche est exercée sur le milieu, plus importante que dans le cas d'un renversement du sens de déplacement correspondant à une vibration harmonique.

2. Procédé de modification du goût de milieux liquides, pâteux et/ou pouvant être versés, et de produits fabriqués et/ou traités avec ces milieux,
caractérisé en ce que le milieu est secoué dans un récipient, et en ce que, lors du mouvement de secousses, des modifications du sens de déplacement apparaissent, mouvement de secousses au cours duquel une accélération au renversement de marche est exercée sur le milieu, plus importante que dans le cas d'un renversement du sens de déplacement correspondant à une vibration harmonique.

3. Procédé pour favoriser la croissance de semences et/ou de plantes,
caractérisé en ce que l'eau utilisée pour préparer ou pour verser est secouée préalablement dans un récipient, et en ce que, lors du mouvement de secousses, des modifications du sens de déplacement apparaissent, mouvement de secousses au cours duquel une accélération au renversement de marche est exercée sur le milieu, plus importante que dans le cas d'un renversement du sens de déplacement correspondant à une vibration harmonique.

4. Procédé selon l'une quelconque des revendications 1 à 3, caractérisé en ce que le milieu est secoué en présence d'une phase gazeuse.

5. Procédé selon la revendication 4, caractérisé en ce que la phase gazeuse ne contient que de la vapeur du liquide.

6. Procédé selon la revendication 4, caractérisé en ce que la phase gazeuse contient un gaz différent de la vapeur, notamment de l'oxygène.

7. Procédé selon l'une quelconque des revendications 1 à 6, caractérisé en ce que le mouvement de secousses a lieu en trois dimensions.

8. Procédé selon la revendication 7, caractérisé en ce que le mouvement de secousses a lieu sur une trajectoire réversible.

9. Procédé selon la revendication 8, caractérisé en ce que le récipient est renversé sur une trajectoire lemniscate à trois dimensions.

10. Procédé selon l'une quelconque des revendications 1 à 9, caractérisé en ce que le milieu est secoué au moins pendant 20 secondes, de préférence au moins pendant 2 minutes avec une fréquence de secousses d'au moins 35 min⁻¹.

11. Procédé selon l'une quelconque des revendications 1 à 10, caractérisé en ce que, pendant les secousses, le milieu est introduit dans le récipient et/ou en est évacué.

12. Utilisation du procédé selon l'une quelconque des revendications 1, 2 ou 4 à 11 dans la fabrication de pâtes alimentaires, notamment de pain.
